# EUROPÄISCHE PATENTSCHRIFT

(11) **EP 1 637 766 B1**
(45) Veröffentlichungstag und Bekanntmachung des Hinweises auf die Patenterteilung: **24.01.2007**
(21) Anmeldenummer: 05019610.4
(22) Anmeldetag: 09.09.2005
(51) Int. Cl.: F16F 15/131, F16F 15/134

(54) **Torsionsschwingungsdämpfer**
Torsional vibration damper
Amortisseur de vibrations de torsion

(30) Priorität: 18.09.2004 DE 102004045366
(43) Veröffentlichungstag der Anmeldung: 22.03.2006
(60) Teilanmeldung: 06011994.8
(73) Patentinhaber: ZF FRIEDRICHSHAFEN AG, 88046 Friedrichshafen (DE)
(72) Erfinder: Manger, Alexander, 97508 Grettstadt (DE); Loukas, Alexander, 97199 Ochsenfurt (DE); Bindig, Sebastian, 97503 Gädheim (DE); Göbel, Hilmar, 97506 Grafenrheinfeld (DE); Schierling, Bernhard, 97273 Kürnach (DE)

(56) Entgegenhaltungen:
- DE-A1- 3 411 090
- DE-A1- 3 447 926
- DE-C2- 3 448 520
- DE-C2- 19 549 459
- US-A- 5 878 856

## Beschreibung

Die Erfindung betrifft einen Torsionsschwingungsdämpfer gemäß dem Oberbegriff des Anspruches 1.

Durch die DE 34 11 090 A1 ist ein Torsionsschwingungsdämpfer mit einem antriebsseitigen Übertragungselement bekannt, das über einen Primärflansch drehfest an einem Antrieb, wie beispielsweise der Kurbelwelle einer Brennkraftmaschine, befestigt ist. Dieses antriebsseitige Übertragungselement weist eine Nabenscheibe auf, die über eine Dämpfungseinrichtung, welche über einen Umfangsfedersatz verfügt, in relativ drehauslenkbarer Wirkverbindung mit einem abtriebsseitigen Übertragungselement steht, das durch eine Schwungmasse und daran befestigte Deckbleche gebildet wird, und im radial inneren Bereich über einen Elementenfuß verfügt, an welchem eine Lagerung axial bewegungsgesichert aufgenommen ist. Da diese Lagerung ihrerseits auf einem Abtrieb, wie beispielsweise einer Getriebeeingangswelle, angeordnet ist, erfolgt die Zentrierung des abtriebsseitigen Übertragungselementes durch die Getriebeeingangswelle, während die Zentrierung des antriebsseitigem Übertragungselementes durch die Kurbelwelle vorgenommen wird. Trotz der unterschiedlichen Bauteile zur Zentrierung von antriebs- und abtriebsseitigen Übertragungselement sind die beiden Übertragungselemente im Wesentlichen um eine gleiche Drehachse bewegbar, da die Getriebeeingangswelle mittels einer üblicherweise als "Pilotlagerung" bezeichneten Lagerung in der Kurbelwelle zentriert ist.

Das abtriebsseitige Übertragungselement dient über seine Schwungmasse zur Aufnahme einer Reibungskupplung, durch welche eine zwischen der Schwungmasse und einer Druckplatte einspannbare Kupplungsscheibe zur Übertragung eines Drehmomentes zwischen An- und Abtrieb einrückbar, sowie zur Unterbrechung dieser Drehmomentübertragung, ausrückbar ist. In eingerücktem Zustand sind Reibbeläge der Kupplungsscheibe durch ein Federsystem der Druckplatte reibschlüssig eingespannt zwischen Schwungmasse und Druckplatte, während im ausgerückten Zustand die Reibbeläge der Kupplungsscheibe von Anpresskräften entlastet sind.

Verständlicherweise entstehen beim Ein- oder Ausrücken Axialkräfte am abtriebsseitigen Übertragungselement, die dieses gemeinsam mit der gegenüber der Getriebeeingangswelle zentrierenden Lagerung in Richtung zum antriebsseitigen Übertragungselement auszulenken versuchen. Einer derartigen Auslenkbewegung des abtriebsseitigen Übertragungselementes wirkt allerdings eine im Erstreckungsbereich der Dämpfungseinrichtung zwischen der Nabenscheibe und den Deckblechen vorgesehene Reibscheibe entgegen, so dass es im Wesentlichen bei einer axialen Abstützung des abtriebsseitigen Übertragungselementes am antriebsseitigen Übertragungselement und damit an der Kurbelwelle verbleibt.

Eine derartige Axialabstützung mag hinreichend sein, wenn der Primärflansch des antriebsseitigen Übertragungselementes, wie bei der DE 34 11 090 A1 gezeigt, relativ biegesteif ausgebildet ist. Für den Fall aber, dass durch die Kurbelwelle erhebliche Taumelbewegungen, mithin also Bewegungen mit einer deutlichen Axialkomponente, eingeleitet werden, versagt eine derartige Konstruktion. Deshalb werden Taumelbewegungen üblicherweise durch eine zwischen Kurbelwelle und Primärflansch eingespannte, axial elastische Platte aufgenommen. Eine solche Platte würde allerdings bei Aufnahme von abtriebsseitigen Axialkräften in unerwünschter Weise in Richtung zum Antrieb durchgebogen. Eine Ausführung mit Anbindung des Torsionsschwingungsdämpfers über eine axial elastische Platte an die Kurbelwelle ist aus der DE 195 49 459 C2 bekannt.

Zurückkommend auf die DE 34 11 090 A1 besteht das weitere Problem, dass in Achsrichtung eine Mehrzahl von Verbindungsstellen zwischen Kurbelwelle und Primärflansch, zwischen Primärflansch und Nabenscheibe, sowie zwischen den Deckblechen und der Schwungmasse des abtriebsseitigen Übertragungselementes bestehen, an denen fertigungsbedingt jeweils Toleranzen auftreten, die sich im ungünstigsten Fall addieren können, so dass axiale Verspannungen im Torsionsschwingungsdämpfer unvermeidbar sind. Die einzige Position, an welcher derartige Toleranzen ausgeglichen werden können, befindet sich an der Dämpfungseinrichtung, und zwar axial zwischen dem antriebsseitigen Deckblech und der Nabenscheibe, wobei ein toleranzbedingtes Übermaß zu einer Kompression einer zwischen diesem Deckblech und der Nabenscheibe angeordneten Axialfeder führen und dadurch die Wirkung des Reibringes zwischen der Nabenscheibe und dem abtriebsseitigen Deckblech erhöhen würde. Die Folge von Übertoleranzen wäre demnach eine erhöhte Reibwirkung im Bereich der Dämpfungseinrichtung und damit eine geringere Entkopplungsgüte zwischen den beiden Übertragungselementen.

Bei der Montage des Torsionsschwingungsdämpfers der DE 34 11 090 A1 wird zunächst der Primärflansch des antriebsseitigen Übertragungselementes an der Kurbelwelle befestigt, und sodann das gemeinsam mit der Dämpfungseinrichtung und ggf. mit der Reibungskupplung vormontierte abtriebsseitige Übertragungselement in Verbindung mit dem antriebsseitigen Übertragungselement gebracht, indem die Nabenscheibe der Dämpfungseinrichtung mit dem Primärflansch verbunden wird. Erst danach wird das Getriebe und damit die Getriebeeingangswelle in Richtung zum Antrieb verschoben, so dass sowohl die Pilotlagerung als auch die das abtriebsseitige Übertragungselement gegenüber der Getriebeeingangswelle positionierende Lagerung jeweils gegenüber der Getriebeeingangswelle axial verschiebbar sein müssen. Somit bestätigen sich die vorangegangenen Ausführungen, wonach die dem abtriebsseitigen Übertragungselement zugeordnete Lagerung lediglich eine Zentrierung dieses Übertragungselementes sicherzustellen vermag, keinesfalls aber eine Abstützung gegen eingeleitete Axialkräfte.

Der Erfindung liegt die Aufgabe zugrunde, mit geringem technischen Aufwand toleranzunabhängig für eine stets gleichbleibend hohe Entkopplungsgüte zu sorgen.

Diese Aufgabe wird erfindungsgemäß durch das im Kennzeichen des Anspruches 1 angegebene Merkmal gelöst.

Die axiale Fixierung des abtriebsseitigen Übertragungselementes an einem Abtrieb, wie beispielsweise einer Getriebeeingangswelle, hat eine axial ortsfeste Positionierung dieses Übertragungselementes unabhängig von der jeweiligen Position des antriebsseitigen Übertragungselementes zur Folge. Es kann demnach bereits im vorab eine axiale Distanz zwischen den beiden Übertragungselementen eingestellt werden, bei welcher auch bei ungünstigster Addition von Toleranzen das Auftreten axialer Spannungen, insbesondere im Bereich der Dämpfungseinrichtung, vermeidbar ist. Besonders vorteilhaft wirkt sich dies aus, wenn im Falle eines Ein- oder Ausrückvorganges durch eine mit einer Schwungmasse des abtriebsseitigen Übertragungselementes verbundene Reibungskupplung Axialkräfte in das abtriebsseitige Übertragungselement eingeleitet werden, die von diesem am Abtrieb, also an der Getriebeeingangswelle, abgestützt werden können, so dass beim Ein- oder Ausrückvorgang entstehende Axialkräfte den Bereich des Abtriebes nicht verlassen können. Sowohl das antriebsseitige Übertragungselement als auch die Dämpfungseinrichtung bleiben aufgrund einer fehlenden Beeinflussung durch ein- oder ausrückbedingte Axialkräfte am abtriebsseitigen Übertragungselement stets axialkraftfrei, so dass zu keinem Zeitpunkt eine diesbezügliche Verschlechterung der Entkopplungsgüte zu befürchten ist. Dieser Vorteil stellt sich unabhängig davon ein, ob das abtriebsseitige Übertragungselement nun unmittelbar über einen Elementenfuß an dem Abtrieb axial fixiert ist, oder aber mittels einer Lagerung, die zwischen dem Elementenfuß und dem Abtrieb angeordnet ist, wobei eine derartige Lagerung mit Vorzug als Wälzlagerung ausgebildet ist, ebenso allerdings auch in Form einer Gleitlagerung realisiert sein kann. Ebenso unabhängig hiervon ist, ob der Elementenfuß an einer abtriebsseitigen Schwungmasse oder an einem mit derselben drehfest verbundenen abtriebsseitigen Ansteuerelement für einen Umfangsfedersatz der Dämpfungseinrichtung vorgesehen ist, wobei dieses Ansteuerelement durch eine Nabenscheibe oder durch Deckbleche gebildet sein kann. Eine Nabenscheibe wird hierbei mit Vorzug an einteiligen Umfangsfedersätzen vorgesehen sein, Deckbleche dagegen in Verbindung mit mehrteiligen Umfangsfedersätzen, wobei die Mehrteiligkeit mit Vorzug durch radial gegeneinander versetzte Teile des Umfangsfedersatzes und einer Nabenscheibe zum Ausdruck kommt, die zwischen den einzelnen Umfangsfedersätzen wirksam ist, wobei die Nabenscheibe sowohl gegenüber dem antriebsseitigen Übertragungselement als auch gegenüber dem abtriebsseitigen Übertragungselement jeweils relativ verdrehbar ist.

Da ungeachtet der Ausführung der Dämpfungseinrichtung erfindungsgemäß stets sichergestellt sein muss, dass das abtriebsseitigen Übertragungselement unmittelbar oder aber die jeweilige Lagerung an dem Abtrieb axial fixiert ist, sind Fixierelemente vorgesehen, die jeweils abtriebsseitig angeordnet sind, wobei mit Vorzug ein erstes Fixierelement in Form einer Schulter unmittelbar an der Getriebeeingangswelle vorgesehen ist, an welcher das abtriebsseitige Übertragungselement oder die jeweilige Lagerung mit einer ersten Axialseite zur Anlage kommt, während ein zweites Fixierelement beispielsweise durch eine den Außendurchmesser der Getriebeeingangswelle umschließende Hülse gebildet wird, die mit ihrem dem abtriebsseitigen Übertragungselement zugewandten abtriebsseitigen Ende dieses Übertragungselement oder aber die jeweilige Lagerung gegen eine Axialverschiebung auf der Getriebeeingangswelle sichert. Mit ihrem vom abtriebsseitigen Übertragungselement abgewandten antriebsseitigen Ende stützt sich die Hülse dagegen an einem Radialvorsprung der Getriebeeingangswelle axial ab, wobei dieser Radialvorsprung mit Vorzug durch einen in eine Vertiefung der Getriebeeingangswelle eingelassenen radialen Spannring gebildet sein kann.

Von Vorteil ist die Ausbildung desjenigen Bauteiles des abtriebsseitigen Übertragungselementes, das gegenüber dem Abtrieb axial fixiert werden soll, mit einem Elementerifuß. Bei direkter Anordnung des abtriebsseitigen Übertragungselementes auf der Getriebeeingangswelle kann dadurch eine geeignete Kontaktfläche geschaffen werden, beispielsweise durch Beschichtung des Elementenfußes an seinem der Getriebeeingangswelle zugewandten Radius, oder aber der Elementenfuß ist zur axial gesicherten Aufnahme einer Lagerung mit einer entsprechenden Profilierung an seinem der Lagerung zugewandten Radius ausgebildet.

Radial außerhalb des Elementenfußes ist das denselben aufnehmende Bauteil des abtriebsseitigen Übertragungselementes mit einer Ausnehmung für den Durchgang und/oder für die Montage von Befestigungselementen ausgebildet, wobei diese Befestigungselemente mit Vorzug durch Niete gebildet werden, welche den Primärflansch des antriebsseitigen Übertragungselementes mit einer Antriebsplatte verbinden. Die Antriebsplatte ist in vorteilhafter Ausgestaltung im Wesentlichen topfförmig mit einem erheblichen axialen Erstreckungsanteil ausgebildet, wodurch ein axialer Durchgangsraum für zumindest ein momentenübertragendes Element, wie beispielsweise eine Antriebswelle, geschaffen wird. Die Antriebsplatte ihrerseits kann mit Vorzug mittels einer lösbaren Befestigung an einer axial flexiblen Platte angebunden sein, die wiederum am Antrieb, wie der Kurbelwelle befestigt ist.

Obwohl somit das antriebsseitige Übertragungselement aufgrund seiner Befestigung an der Kurbelwelle gegenüber dem Antrieb zentriert ist, das abtriebsseitige Übertragungselement dagegen aufgrund seiner Lagerung auf der Getriebeeingangswelle gegenüber dem Abtrieb zentriert ist, sind die beiden Übertragungselemente dennoch zu einer Bewegung im Wesentlichen um eine gemeinsame Drehachse befähigt, insbesondere wenn die Kurbelwelle mittels einer sogenannten "Pilotlagerung" das antriebsseitige Ende der Getriebeeingangswelle zentrierend aufnimmt.

Der bereits erwähnte Umfangsfedersatz der Dämpfungseinrichtung ist in einer Kammer des antriebsseitigen Übertragungselementes aufgenommen, die in Achsrichtung zwischen dem Primärflansch und einem demselben zugeordneten Dichtblech ausgebildet und zumindest teilweise mit viskosem Medium befüllt ist. Um einem Verlust dieses viskosen Mediums vorzubeugen, sind Dichtungen vorgesehen, von denen jede mit jeweils einem Befestigungsende an je einem der Übertragungselemente aufgenommen und mit jeweils einem Dichtende in den Erstreckungsbereich des jeweils anderen Übertragungselementes geführt ist. Hierbei wirken mit Vorzug beide Dichtungen berührungsfrei, um die beim erfindungsgemäßen Torsionsschwingungsdämpfer vorhandene hohe Entkopplungsgüte nicht zu beeinträchtigen. Mit Vorzug wirkt hierbei eine erste Dichtung dem Austritt viskosen Mediums aus der Kammer nach radial innen entgegen, während eine zweite Dichtung den Austritt des viskosen Mediums in Richtung zum abtriebsseitigen Übertragungselement verhindert.

Besondere Vorzüge ergeben sich bei der Montage des Torsionsschwingungsdämpfers im Antriebsstrang eines Kraftfahrzeuges. So wird zunächst der gesamte Torsionsschwingungsdämpfer inklusive der durch Befestigungselemente angebrachten Antriebsplatte unter Zwischenordnung einer Lagerung auf den Abtrieb in Form der Getriebeeingangswelle aufgepresst, wobei bereits durch diese Maßnahme eine axiale Bewegungssicherung auf der Getriebeeingangswelle entsteht. Darüber hinaus kann zur weiteren Absicherung der axialen Fixierung gegenüber der Getriebeeingangswelle die Verwendung der bereits behandelten Fixierelemente von Vorteil sein. Anschließend wird das Getriebe mit dem Antrieb, wie der Kurbelwelle einer Brennkraftmaschine, verbunden, wobei die Getriebeeingangswelle und damit auch der Torsionsschwingungsdämpfer in Richtung zum Antrieb verlagert wird, bis die Antriebsplatte in Anlage an einer mit der Kurbelwelle festen, flexiblen Platte gekommen ist. Während dieser Annäherungsbewegung der Getriebeeingangswelle und damit des Torsionsschwingungsdämpfers an die Kurbelwelle besteht bereits eine Zentrierung, wenn erfindungsgemäß an der Kurbelwelle ein Führungshohlzapfen befestigt ist, der sich in Richtung zur Abtriebsseite erstreckt und sowohl die Antriebsplatte als auch den Primärflansch zentrierend stützt. Bereits vor einer Montage des Torsionsschwingungsdämpfers, aber auch während der Montage, wirkt sich zudem eine Hilfszentrierung vorteilhaft aus, die am Primärflansch des antriebsseitigen Übertragungselementes vorgesehen ist und mit dem Elementenfuß des abtriebsseitigen Übertragungselementes in einer Weise zusammenwirkt, dass eine zu starke axiale Annäherung des antriebs- und des abtriebsseitigen Übertragungselementes zueinander ebenso wie eine unerwünscht große relative Radialauslenkung derselben zum Schutz der bereits erwähnten Dichtungen verhindert wird.

Die Erfindung wird anhand eines Ausführungsbeispieles näher erläutert. Es zeigt:
- Figur 1:: Einen Längsschnitt durch einen mit Reibungskupplung versehenen Torsionsschwingungsdämpfer mit zweiteiligem Umfangsfedersatz und Anordnung einer Schwungmasse eines abtriebsseitigen Übertragungselementes über einer als Wälzlagerung ausgebildete Lagerung auf einer Getriebeeingangswelle;
- Figur 2:: eine vergrößerte Herauszeichnung des in Fig. 1 eingekreisten Bereiches, allerdings mit Ausbildung der Lagerung als Gleitlagerung;
- Figur 3:: wie Fig. 2, aber mit direkter Anordnung der Schwungmasse auf der Getriebeeingangswelle;
- Figur 4:: wie Fig. 1, aber mit einteiliger Ausbildung des Umfangsfedersatzes;
- Figur 5:: wie Fig. 4, aber mit Anordnung des abtriebsseitigen Übertragungselementes über eine Nabenscheibe auf der Lagerung.

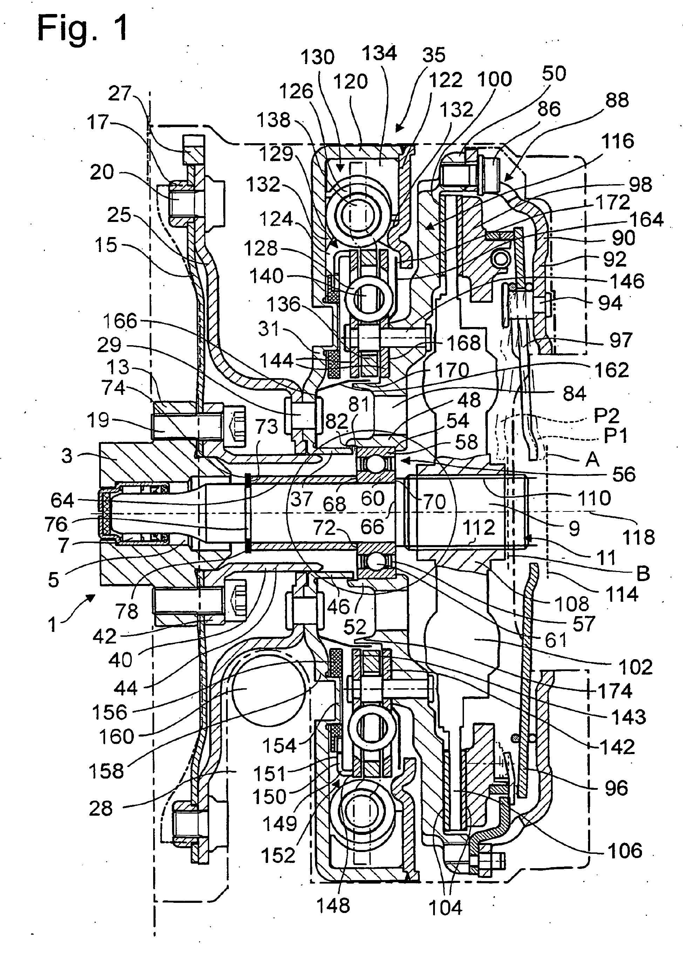

In Fig. 1 ist als Antrieb 1 eine Kurbelwelle 3 einer Brennkraftmaschine dargestellt, die in einer mittigen Aufnahme 5 über eine Pilotlagerung 7 zur Zentrierung einer Getriebeeingangswelle 9 verfügt, die, bezogen auf das dargestellte System, als Abtrieb 11 wirksam ist. Die Kurbelwelle 3 weist einen Kurbelwellenflansch 13 auf, an welchem über lösbare Befestigungsmittel 19 eine axial elastische Platte 15 befestigt ist, die sich nach radial außen erstreckt und dort eine Verbindung eingeht mit einer Antriebsplatte 25. Zur.Herstellung dieser Verbindung sind an der axial elastischen Platte 15 Gewindehülsen 17 befestigt, in welche lösbare Befestigungsmittel 20 nach Durchdringung von Öffnungen in der Antriebsplatte 25 einführbar sind. Die Antriebsplatte 25 ihrerseits trägt einen Zahnkranz 25, der zum Eingriff mit einem nicht dargestellten Starterritzel vorgesehen ist.

Die Antriebsplatte 25 verläuft insbesondere im radial inneren Bereich mit einer deutlichen Axialkomponente, wodurch ein axialer Durchgangsraum 28 für zumindest ein momentenübertragendes Element 160, wie beispielsweise eine Antriebswelle, geschaffen wird. Im radial innersten Bereich geht die Antriebsplatte 25 wieder in einen Bereich mit im Wesentlichen radialer Erstreckung über, welcher mittels Befestigungselementen 29 zur festen Verbindung der Antriebsplatte 25 mit einem Primärflansch 31 eines antriebsseitigen Übertragungselementes 35 vorgesehen ist. Die Befestigungselemente 29 sind vorzugsweise als Niete oder Schrauben ausgebildet, denkbar sind aber auch eine Verschleißung oder eine Verstemmung als Befestigungselement 29. Sowohl das radial innere Ende der Antriebsplatte 25 als auch das radial innere Ende des Primärflansches 31 vermögen sich jeweils auf einem im Wesentlichen axial verlaufenden Schenkel 44 eines Führungshohlzapfens 40 abzustützen, der, im Wesentlichen senkrecht zum Axialschenkel 44, über einen im Wesentlichen radial verlaufenden Schenkel 42 zur Befestigung am Kurbelwellenflansch 13 mittels der bereits erwähnten lösbaren Befestigungsmittel 19 dient. Wie aus Fig. 1 sehr gut ersichtlich ist, dient der Führungshohlzapfen 40 für eine Zentrierung von Antriebsplatte 25 und Primärflansch 31 gegenüber einer Drehachse 118, die für Kurbelwelle 3 und Getriebeeingangswelle 9 im Wesentlichen gleich ist.

Das bereits erwähnte radial innere Ende des Primärflansches 31 ist mit einer Umkantung 37 versehen, die sich im Wesentlichen in Richtung zum Abtrieb 11 erstreckt und mit ihrem axial freien Ende mittels eines in Achsrichtung vorgesehenen ersten Spaltes 81 von einer auf der Getriebeeingangswelle 9 angeordneten Lagerung 56 getrennt ist, während das freie Ende der Umkantung 37 mittels eines radialen zweiten Spaltes 82 von einem Axialvorsprung 52 an einem Elementenfuß 48 getrennt ist, wobei dieser Elementenfuß 48 an seiner der Lagerung 56 zugewandten radialen Innenseite mit einer Radialprofilierung 54 versehen ist, um die Lagerung 56 in Achsrichtung fest aufnehmen zu können. Die Lagerung 56 ist an ihrer radialen Innenseite durch Aufpressen auf die Getriebeeingangswelle 9 gegenüber derselben bewegungsgesichert aufgenommen.

Näher auf die Lagerung 56 eingehend, ist diese gemäß Fig. 1 als Wälzlagerung 57 ausgebildet, mit einem radial äußeren Lagerring 58, der mit seiner radialen Außenseite in der Radialprofilierung 54 des Elementenfußes 48 axial festgehalten ist, während der Lagerring 58 an seiner radialen Innenseite über Wälzelemente 61 mit einem radial inneren Lagerring 60 wirkverbunden ist, der auf die Getriebeeingangswelle 9 gepresst ist.

Obwohl somit der Elementenfuß 48, der Teil einer Schwungmasse 50 eines abtriebsseitigen Übertragungselementes 116 ist, über die Lagerung 56 axial bewegungsgesichert auf der Getriebeeingangswelle 9 angeordnet ist, ist die Getriebeeingangswelle 9 mit Vorzug durch eine Hülse 64 umschlossen, die mit einem der Lagerung 56 zugewandten abtriebsseitigem Ende 72 den radial inneren Lagerring 60 gegen eine Bewegung zum Antrieb 1 hin sichern soll, und somit diesen Lagerring 60 axial zwischen sich und einer Schulter 70 der Getriebeeingangswelle 9 hält, wobei diese Schulter 70 aufgrund eines Querschnittsüberganges an der Getriebeeingangswelle 9 entsteht. Die bereits erwähnte Hülse 64 stützt sich mit ihrem von der Lagerung 56 abgewandten, mithin also antriebsseitigen Ende 73 an einem Radialvorsprung 74 der Getriebeeingangswelle 9 ab, wobei dieser Radialvorsprung 74 durch einen in eine Vertiefung 76 der Getriebeeingangswelle 9 eingelassenen radialen Spannring 78 gebildet wird. Durch ein Zusammenwirken dieser Hülse 64 mit der Getriebeeingangswelle 9 dient die erwähnte Schulter 70 als erstes Fixierelement 66 für die Lagerung 56, das der Lagerung 56 zugewandte abtriebsseitige Ende 72 der Hülse 64 dagegen als zweites Fixierelement 68. Beide Fixierelemente 66, 68 unterstützen die axiale Festlegung der Lagerung 56 gegenüber der Getriebeeingangswelle 9, die durch das erwähnte Aufpressen bereits vorliegt.

Der Elementenfuß 48, der in der Umkantung 37 des Primärflansches 31 eine Hilfszentrierung 46 vorfindet, dient gemäß Fig. 1 als radiale Innenbegrenzung der Schwungmasse 50, die unmittelbar radial außerhalb des Elementenfußes 48 Ausnehmungen 84 aufweist, die im Wesentlichen mit den Befestigungselementen 29 fluchten und zum Durchgang und/oder zur Montage dieser Befestigungselemente 29 dienen. Wiederum radial außerhalb dieser Ausnehmungen 84 schließt sich eine Vernietung 146 an, durch welche Deckbleche 142, 143 drehfest an der Schwungmasse 50 aufgenommen sind. Die Deckbleche 142, 143 dienen hierbei als abtriebsseitiges Ansteuerelement 144 einer Dämpfungseinrichtung 130, die entsprechend Fig. 1 über einen zweiteiligen Umfangsfedersatz 129 verfügt. Ein erster Teil 126 des Umfangfedersatzes 129 ist im radial äußeren Bereich einer Kammer 124 angeordnet, die axial zwischen dem Primärflansch 31 und einem Dichtblech 122 vorgesehen ist, wobei das letztgenannte Dichtblech 122 an einem Axialansatz 120 des Primärflansches 31 befestigt ist, vorzugsweise mittels einer Schweißnaht. Der Axialansatz 120 erstreckt sich hierbei im Wesentlichen in Achsrichtung am Außenumfang des Radialflansches 31.

Dieser Axialansatz 120 dient mit seiner radialen Innenseite als Führungsfläche für Gleitschuhe 134, die ihrerseits zur Aufnahme des ersten Teiles 126 des Umfangfedersatzes 129 dienen. Ferner sind an Primärflansch 31 und Dichtblech 122 jeweils antriebsseitige Ansteuerelemente 132 vorgesehen, welche den ersten Teil 126 des Umfangsfedersatzes 129 ansteuern, der sich daraufhin mit seinen entgegengesetzten Federsatzenden an ersten Ansteuermitteln 138 einer Nabenscheibe 136 abstützen. Diese Nabenscheibe 136 verfügt über zweite Ansteuermittel 140, durch welche zweite Teile 128 des Umfangsfedersatzes 129 beaufschlabar sind, wobei sich diese zweiten Teile 128 mit ihren entgegengesetzten Federsatzenden an den bereits erwähnten Deckblechen 142, 143 und damit am abtriebsseitigen Ansteuerelement 144 abstützen.

Das antriebsseitige Deckblech 143 steht mittels eines Formschlusses 148 in drehfester Verbindung mit einer Antriebsscheibe 149, die über eine Innenverzahnung 151 verfügt und über diese Innenverzahnung in Wirkverbindung mit zumindest einem Planetenrad 156 steht, das jeweils auf einer Lagerausdrückung 154 des Primärflansches 31 gelagert ist. Dem Primärflansch 31 kommt somit die Funktion eines Planetenträgers 158 eines Planetengetriebes 152 zu, während die Antriebsscheibe 149 als Hohlrad 150 wirkt.

Die Kammer 124 ist zumindest teilweise mit viskosem Medium gefüllt, weshalb nach radial innen eine erste Dichtung 162 und in Achsrichtung eine zweite Dichtung 164 vorgesehen ist. Die erste Dichtung 162 wird mit einem Befestigungsende 166 durch die Befestigungselemente 29 am Primärflansch 31 und damit am antriebsseitigen Übertragungselement 35 gesichert und greift mit einem Dichtungsende 170, das mit einem zum Primärflansch 31 vorspringenden Axialansatz 174 der Schwungmasse 50 überlappt, in den Erstreckungsbereich des abtriebsseitigen Übertragungselementes 116 ein. Die zweite Dichtung 164 ist durch die Vernietung 146 mit einem Befestigungsende 168 an der Schwungmasse 50 und damit am abtriebsseitigen Übertragungselement 116 befestigt und greift radial nach außen, wo die Dichtung 164 mit ihrem Dichtungsende 172 radial mit der Innenseite des Dichtbleches 122 überlappt, und demnach in den Erstreckungsbereich des antriebsseitigen Übertragungselementes 35 eingreift. Mit Vorzug sind beide Dichtungen 162, 164 an ihren jeweiligen Dichtungsenden 166, 168 gegenüber dem zugeordneten Bereichen des jeweiligen Übertragungselementes 35, 116 berührungsfrei, so dass keine Reibung und damit eine Reduzierung der Entkopplungsgüte der Dämpfungseinrichtung 130 befürchtet werden muss.

Zurückkommend auf die Schwungmasse 50, nimmt diese im Bereich ihres radialen Außenumfanges durch Befestigungsmittel 86 ein Gehäuse 92 einer Reibungskupplung 88 auf, deren Druckplatte 90 über eine durch Lagerzapfen 94 im Gehäuse 92 gehaltene Membranfeder 96 verfügt, durch welche eine Anpressplatte 98 axial beaufschlagbar ist. Axial zwischen dieser Anpressplatte 98 und einer an der Schwungmasse 50 zur Abtriebsseite hin vorgesehenen Anlagefläche 100 sind Reibbeläge 104 einer Kupplungsscheibe 102 vorgesehen, wobei die Reibbeläge 104 an einer Belagfederung 106 der Kupplungsscheibe 102 beidseits aufgenommen sind. Im radial inneren Bereich weist die Kupplungsscheibe 102 eine Kupplungsnabe 108 auf, die über eine Verzahnung 110 drehfest, aber axial verlagerbar, auf einem Verzahnungsabschnitt 112 der Getriebeeingangswelle 9 angeordnet ist. Die Membranfeder 96 der Reibungskupplung 88 wirkt mit einem strichliniert angedeuteten Ausrücker 114 zusammen, der in seiner eingezeichneten Stellung A Membranfederzungen 97 die strichliniert eingezeichnete erste Position P1 gewährt, in welcher die Reibbeläge 104 der Kupplungsscheibe 102 kraftschlüssig zwischen der Anlagefläche 100 der Schwungmasse 50 und der Anpressplatte 98 eingespannt ist, und zur Übertragung eines an der Schwungmasse 50 anliegenden Drehmomentes über die Kupplungsscheibe 102 auf die Getriebeeingangswelle 9 befähigt ist. Um von diesem eingerückten Zustand in den ausgerückten Zustand zu gelangen, wird der Ausrücker 114 nach links in seine eingezeichnete Stellung B verlagert und beaufschlagt dadurch die Membranfederzungen 97 in die ebenfalls strichliniert eingezeichnete zweite Position P2, in welcher die Reibbeläge 104 zwischen Anlagefläche 100 und Anpressplatte 98 entlastet sind, so dass die Übertragung eines Momentes zwischen Schwungmasse 50 und Getriebeeingangswelle 9 zumindest reduziert ist, die Reibungskupplung 88 sich demnach zumindest in teilausgerücktem Zustand befindet.

Bevor der erfindungsgemäße Torsionsschwingungsdämpfer in einem Kraftfahrzeug montiert ist, soll bereits während der Verpackungs- und Transportphase eine unerwünscht starke axiale und/oder radiale Verlagerung der beiden Übertragungselemente 35, 116 zueinander vermieden werden, um Schäden am Umfangsfedersatz 129 sowie an den Dichtungen 162, 164 wirksam verhindern zu können. Aus diesem Grund greift das abtriebsseitige Übertragungselement 116 mit seinem Elementenfuß 48 an der als Hilfszentrierung 46 wirksamen Umkantung 37 des Primärflansches 31 und damit des antriebsseitigen Übertragungselementes 35 an, so dass lediglich in der Größenordnung der bereits erwähnten Spalte 81, 82 zwischen dem Axialvorsprung 52 des Elementenfußes 48 und der Hilfszentrierung 46 eine Radial- sowie eine aufeinander zugerichtete Axialverlagerung der beiden Übertragungselemente 35, 116 möglich ist.

Bevor eine Montage des Torsionsschwingungsdämpfers im Kraftfahrzeug erfolgt, besteht auf jeden Fall bereits mittels der Befestigungselemente 29 eine feste Anbindung der Antriebsplatte 25 am Primärflansch 31. Die Reibungskupplung 88 kann, muss aber zu diesem Zeitpunkt noch nicht an der Schwungmasse 50 des abtriebsseitigen Übertragungselementes 50 befestigt sein.

Für die Montage wird die Lagerung 56 gemeinsam mit dem abtriebsseitigem Übertragungselement 116 auf der Getriebeeingangswelle 9 aufgepresst und zwar vorzugsweise in einer Position, in welcher die Lagerung 56 an der Schulter 70 der Getriebeeingangswelle 9 axial zur Anlage kommt. Dadurch ist bereits das erste Fixierelement 66 wirksam. Anschließend wird die Hülse 64 über die Getriebeeingangswelle 9 geschoben und durch Einbringen des radialen Spannringes 78 in die Vertiefung 76 der Getriebeeingangswelle 9 positioniert. Damit liegt auch das zweite Fixierelement 68 für die Lagerung 56 vor. Anschließend wird das die Getriebeeingangswelle 9 beinhaltende Getriebe in Richtung zum Antrieb 1, also zur Brennkraftmaschine hin, verlagert und dabei die Getriebeeingangswelle 9 immer weiter in die Aufnahme 5 der Kurbelwelle 3 eingeschoben. Bei dieser Bewegung gleitet die Antriebsplatte 25 sowie der Primärflansch 31 mit dem jeweiligen radial inneren Ende auf die axialen Schenkel 44 des Führungshohlzapfens 40, so dass von diesem Zeitpunkt an auch das antriebsseitige Übertragungselement 35 eine Zentrierung findet. Sobald die Getriebeeingangswelle 9 mit ihrem antriebsseitigem Ende in der Pilotlagerung 7 aufgenommen ist, liegt darüber hinaus auch eine Zentrierung der Getriebeeingangswelle 9 in der Kurbelwelle 3 vor, so dass beide Wellen 3, 9 im Wesentlichen über die gleiche Drehachse 118 verfügen. Wenn bei dieser Annäherungsbewegung der beiden Wellen 3, 9 aneinander die Antriebsplatte 25 axial in Anlage an der axial elastischen Platte 15 gekommen ist, kann über die Befestigungsmittel 20 eine endgültige Verbindung hergestellt werden, wobei diese aufgrund der Zentrierung des antriebsseitigen Übertragungselementes 35 auf dem Führungshohlzapfen 40 problemlos vonstatten geht. Von diesem Zeitpunkt an verliert die vor der Montage benötigte Hilfszentrierung 37 ihre Funktion, da nun das antriebsseitige Übertragungselement 35 über die Antriebsplatte 25 an der Kurbelwelle 3 und damit am Antrieb 1 zentriert ist, während das abtriebsseitige Übertragungselement 116 weiterhin über die Lagerung 56 an der Getriebeeingangswelle 9 und damit am Abtrieb 11 zentriert ist. Wegen dieser besönderen Zentrierung der beiden Übertragungselemente 35, 116 zueinander sind jederzeit durch geringfügige axiale Verschiebebewegungen der Getriebeeingangswelle 9 gegenüber der Kurbelwelle 3 axiale Korrekturverlagerungen zwischen den beiden Übertragungselementen 35, 116 möglich, so dass für den Fall, dass zwischen Antriebsplatte 25 und Primärflansch 31, sowie zwischen abtriebsseitigem Ansteuerelement 144 und Schwungmasse 50 Toleranzen vorhanden sind, die sich in ungünstiger Weise addieren, ein Ausgleich vorgenommen werden kann. Dadurch sind die beiden Übertragungselemente 35, 116 in Achsrichtung jeweils derart zueinander einstellbar, dass jeweils optimale Toleranzen zwischen diesen Übertragungselementen 35, 116, insbesondere hierbei aber innerhalb der Dämpfungseinrichtung 130 bestehen, so dass eine optimale Entkopplungsgüte durch die Dämpfungseinrichtung 130 erzielt werden kann, die nicht durch Verspannungen oder ungewollte Reibungen innerhalb der Dämpfungseinrichtung 130 beeinträchtigt sind. Insbesondere bei Bewegungen der Kurbelwelle 3 mit einer Axialkomponente, üblicherweise als Taumelbewegungen bezeichnet, kann die axial elastische Platte 15 bereits einen Teil dieser Taumelbewegungen vor Weitergabe an das antriebsseitige Übertragurigselement 35 ausfiltern, während das vorgenannte Übertragungselenient 35 den Restanteil dieser Taumelbewegungen praktisch nicht auf das abtriebsseitige Übertragungselement 116 übertragen kann.

Ebenso vorteilhaft gestaltet sich ein Übergang zwischen dem ein- und dem ausgerückten Zustand, bei welchem Axialkräfte der Membranfeder 96 über die Anpressplatte 98 und die Kupplungsscheibe 102 auf die Schwungmasse 50 des abtriebsseitigen Übertragungselementes 116 übertragen werden. Da sich dieses Übertragungselement 116 allerdings axial an der Lagerung 56 abzustützen vermag, die ihrerseits auf der Getriebeeingangswelle 9 und damit abtriebsseitig ortsfest ist, wird dieser Kraftfluss niemals die Abtriebsseite des Torsionsschwingungsdämpfers verlassen können. Auch der Ein- oder Ausrückvorgang wird demnach keine Veränderung der Situation in der Dämpfungseinrichtung 130 auslösen.

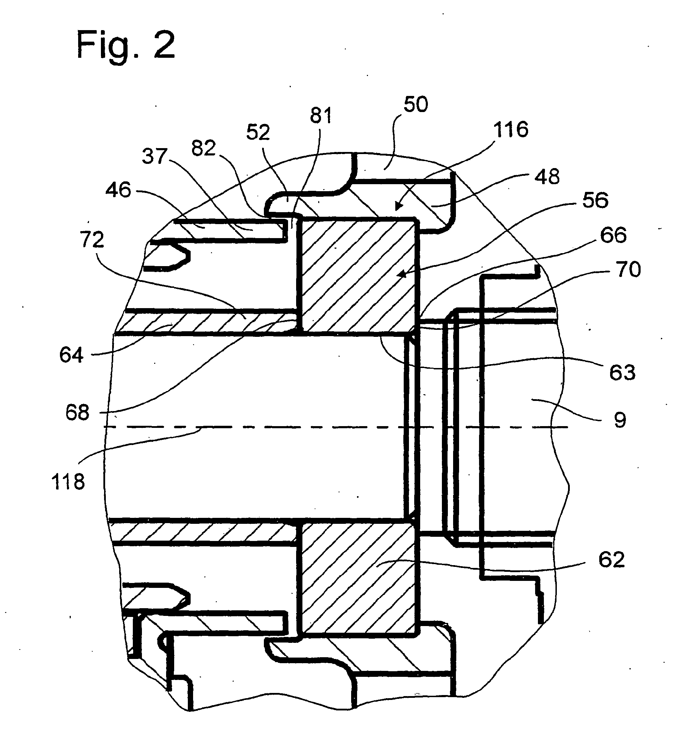

Fig. 2 entspricht der eingekreisten Darstellung in Fig. 1, allerdings ist die Lagerung 56 nun durch eine Gleitlagerung 62 gebildet. Ebenso wie bei Verwendung einer Wälzlagerung wird die Gleitlagerung 62 axial fest am Elementenfuß 48 der Schwungmasse 50 des abtriebsseitigen Übertragungselementes 116 aufgenommen sein, während allerdings die radiale Innenseite der Gleitlagerung 62 zur Gewährleistung einer Relativdrehbewegung des abtriebsseitigen Übertragungselementes 116 gegenüber der Getriebeeingangswelle 9 gleitend auf der Getriebeeingangswelle 9 angeordnet sein muss. Die axiale Bewegungssicherung der Gleitlagerung 62 auf der Getriebeeingangswelle 9 erfolgt demnach allein über die Fixierelemente 66, 68, also durch die Schulter 70 an der Getriebeeingangswelle 9 sowie durch das abtriebsseitige Ende 72 der Hülse 64. Sehr gut ersichtlich in Fig. 2 ist außerdem die Wirkung der Hilfszentrierung 64 gegenüber dem Axialvorsprung 52 am Elementenfuß 48.

Zugunsten einer verbesserter Drehbarkeit der Gleitlagerung 62 auf der Getriebeeingangswelle 9 kann die Gleitlagerung 62 an ihrer radialen Innenseite mit einer gleitverbessernden Beschichtung 63 versehen sein.

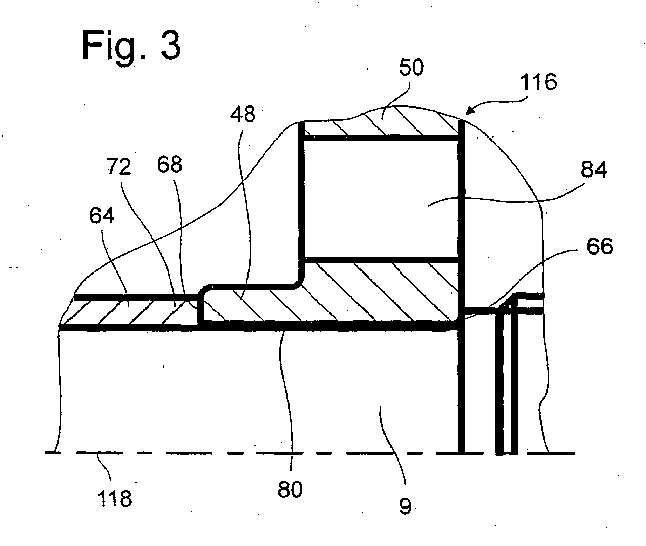

Eine gleitverbessernde Beschichtung 80 kann auch unmittelbar am Elementenfuß 48 vorgesehen sein, wenn dieser, wie aus der vereinfacht dargestellten Fig. 3 ersichtlich, an der radialen Innenseite des Elementenfußes 48 des abtriebsseitigen Übertragungselementes 116 vorgesehen ist. Bei dieser Ausführung sitzt das abtriebsseitige Übertragungselement 116 - unter Verzicht auf eine Lagerung 56 - unmittelbar auf der Getriebeeingangswelle 9, und wird ebenso wie die Gleitlagerung nach Fig. 2 allein durch die Fixierelemente 66, 68 axial bewegungsgesichert.

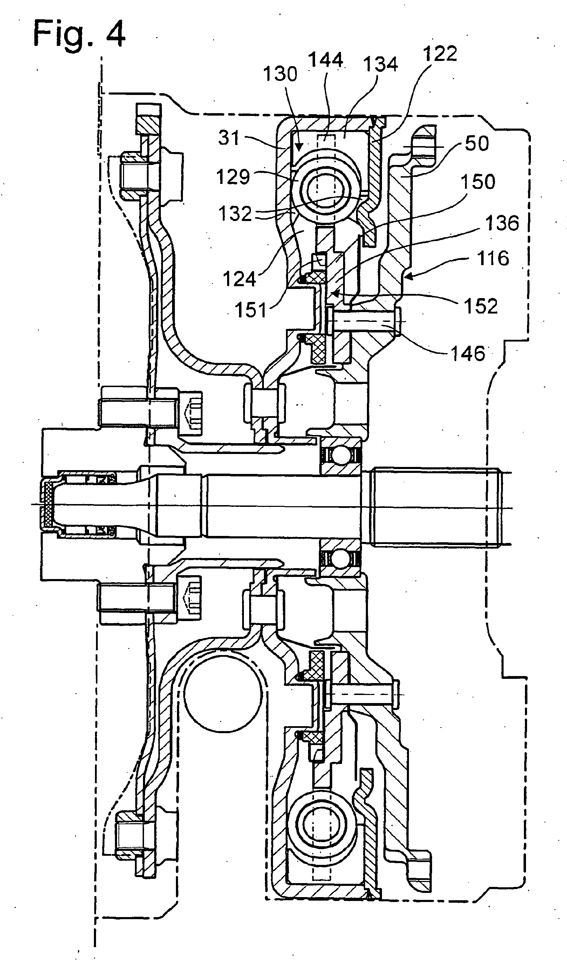

Fig. 4 unterscheidet sich von Fig. 1 durch die Ausbildung des Umfangsfedersatzes 129 der Dämpfungseinrichtung 130, wobei der Umfangsfedersatz hier lediglich einteilig ist. Ebenso wie bei Fig. 1 sind allerdings an Primärflansch 31 und Dichtblech 122 antriebsseitige Ansteuerelemente 132 zur Beaufschlagung des Umfangsfedersatzes 129 vorgesehen, der sich anderenends am abtriebsseitigen Ansteuerelement 144, vorgesehen an der Nabenscheibe 136, abstützt. Abweichend von der Ausführung nach Fig. 1 ist die Nabenscheibe 136 hier unmittelbar an der Schwungmasse 50 und damit drehfest mit dem abtriebsseitigen Übertragungselement 116 aufgenommen.

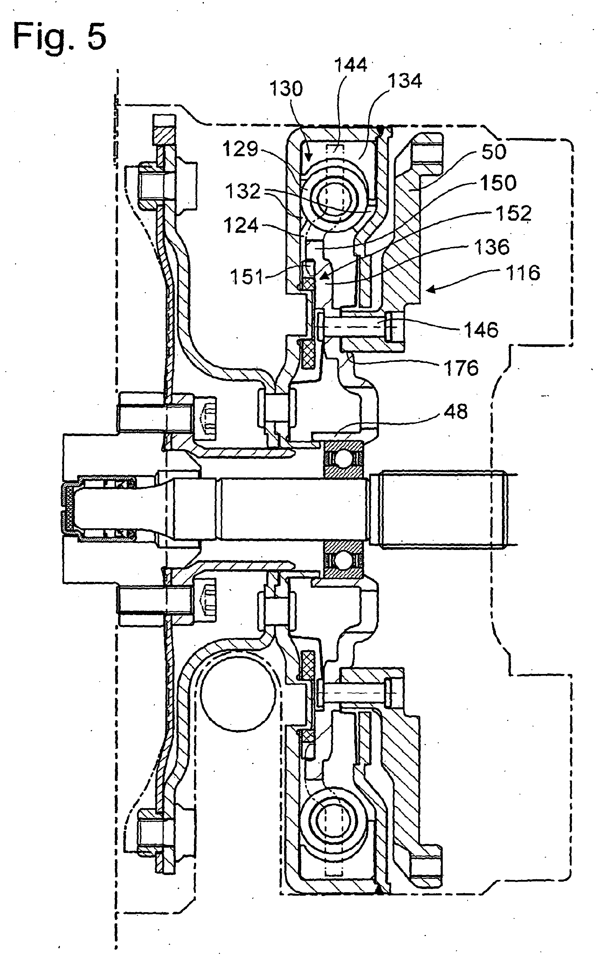

Fig. 5 unterscheidet sich von der Ausbildung nach Fig. 4 durch die Maßnahme, den Elementenfuß 48 an der Nabenscheibe 136 anzuformen, so dass die Schwungmasse 50 des abtriebsseitigen Übertragungselementes 116 ihre Zentrierfunktion an die Nabenscheibe 136 abgibt. Stattdessen ist die Schwungmasse 50 an einem Stützvorsprung 176 der Nabenscheibe 136 zentriert und durch die Vernietung 146 fest mit der Nabenscheibe 136 verbunden.

### Bezugszeichenliste

- 1: Antrieb
- 3: Kurbelwelle
- 5: Aufnahme
- 7: Pilotlagerung
- 9: Getriebeeingangswelle
- 11: Abtrieb
- 13: Kurbelwellenflansch
- 15: axial elastische Platte
- 17: Gewindehülse
- 19, 20: lösbare Befestigungsmittel
- 25: Antriebsplatte
- 27: Zahnkranz
- 28: axialer Durchgangsraum
- 29: Befestigungselemente
- 31: Primärflansch
- 35: antriebsseitiges Übertragungselement
- 37: Umkantung
- 40: Führungshohlzapfen
- 42,44: Schenkel des Führungshohlzapfens
- 46: Hilfszentrierung
- 48: Elementenfuß
- 50: Schwungmasse
- 52: Axialvorsprung am Elementenfuß
- 54: Radialprofilierung
- 56: Lagerung
- 57: Wälzlagerung
- 58,60: Lagerring
- 61: Wälzelemente
- 62: Gleitlagerung
- 63: Beschichtung
- 64: Hülse
- 66, 68: Fixierelemente
- 70: Schulter
- 72, 73: Ende
- 74: Radialvorsprung
- 76: Vertiefung
- 78: radialer Spannring
- 80: Beschichtung
- 81, 82: Spalt
- 84: Ausnehmungen
- 86: Befestigungsmittel
- 88: Reibungskupplung
- 90: Druckplatte
- 92: Gehäuse
- 94: Lagerzapfen
- 96: Membranfeder
- 97: Membranfederzungen
- 98: Anpressplatte
- 100: Anlagefläche der Schwungmasse
- 102: Kupplungsscheibe
- 104: Reibbeläge
- 106: Belagfederung
- 108: Kupplungsnabe
- 110: Verzahnung
- 112: Verzahnungsabschnitt
- 114: Ausrücker
- 116: abtriebsseitiges Übertragungselement
- 118: Drehachse
- 120: Axialansatz am Primärflansch
- 122: Dichtblech
- 124: Kammer
- 126, 128: Teile des Umfangsfedersatzes
- 129: Umfangsfedersatz
- 130: Dämpfungseinrichtung
- 132: antriebsseitige Ansteuerelemente
- 134: Gleitschuhe
- 136: Nabenscheibe
- 138: erste Ansteuermittel
- 140: zweite Ansteuermittel
- 142, 143: Deckbleche
- 144: abtriebsseitiges Ansteuerelement
- 146: Vernietung
- 148: Formschluss
- 149: Antriebsscheibe
- 150: Hohlrad
- 151: Innenverzahnung
- 152: Planetengetriebe
- 154: Lagerausdrückung
- 156: Planetenrad
- 158: Planetenträger
- 160: momentenübertragendes Element
- 162, 164: Dichtung
- 166, 168: Befestigungsende
- 170,172: Dichtungsende
- 174: Axialansatz
- 176: Stützvorsprung

## Patentansprüche

1. Torsionsschwingungsdämpfer mit einem drehfest an einem Antrieb (1) angreifenden und durch denselben zentrierten antriebsseitigen Übertragungselement (35) und einem über eine Dämpfungseinrichtung (130) relativ zum antriebsseitigen Übertragungselement (35) drehauslenkbaren abtriebsseitigen Übertragungselement (116), das an einem Abtrieb (11) zentriert ist,
**dadurch gekennzeichnet,**
**dass** das abtriebsseitige Übertragungselement (116) an dem Abtrieb (11) axial bewegungsgesichert aufgenommen ist.

2. Torsionsschwingungsdämpfer nach Anspruch 1 mit einem abtriebsseitigen Übertragungselement (116), das über eine Schwungmasse (50) und zumindest ein drehfest mit derselben verbundenes, abtriebsseitiges Ansteuerelement (144) für einen der Dämpfungseinrichtung (130) zugeordneten Umfangsfedersatz (129) dient, und mit einem durch eine Getriebeeingangswelle (9) gebildeten Abtrieb (11),
**dadurch gekennzeichnet,**
**dass** entweder die Schwungmasse (50) oder ein abtriebsseitiges Ansteuerelement (144) über einen Elementenfuß (48) zur axial bewegungsgesicherten Aufnahme auf der Getriebeeingangswelle (9) vorgesehen ist.

3. Torsionsschwingungsdämpfer nach Anspruch 2.
**dadurch gekennzeichnet,**
**dass** der Elementenfuß (48) unmittelbar axial bewegungsgesichert auf der Getriebeeingangswelle (9) aufgenommen ist.

4. Torsionsschwingungsdämpfer nach Anspruch 2 mit einer radial zwischen dem abtriebsseitigen Übertragungselement und der Getriebeeingangswelle angeordneten Lagerung,
**dadurch gekennzeichnet,**
**dass** der Elementenfuß (48) über die Lagerung (56) axial bewegungsgesichert auf der Getriebeeingangswelle (9) aufgenommen ist.

5. Torsionsschwingungsdämpfer nach einem der Ansprüche 1, 2 oder 4,
**dadurch gekennzeichnet,**
**dass** die Lagerung (56) zur axialen Bewegungssicherung des abtriebsseitigen Übertragungselementes (116) auf der Getriebeeingangswelle (9) aufgepresst wird.

6. Torsionsschwingungsdämpfer nach einem der Ansprüche 1 bis 4 oder 5,
**dadurch gekennzeichnet,**
**dass** der Elementenfuß (48) des abtriebsseitigen Übertragungselementes (116) axial zwischen der Getriebeeingangswelle (9) zugeordneten Fixierelementen (66,68) gehalten ist.

7. Torsionsschwingungsdämpfer nach Anspruch 1 bis 4 oder 5,
**dadurch gekennzeichnet,**
**dass** die Lagerung (56) axial zwischen den Fixierelementen (66,68) gehalten ist.

8. Torsionsschwingungsdämpfer nach Anspruch 6 oder 7,
**dadurch gekennzeichnet,**
**dass** die Getriebeeingangswelle (9) zur Bildung eines ersten Fixierelementes (66) eine Schulter (70) aufweist, an welcher der Elementenfuß (48) oder die Lagerung (56) mit einer ersten Axialseite zur Anlage kommt, und als zweites Fixierelement (68) ein dem abtriebsseitigen Übertragungselement (116) zugewandtes abtriebsseitiges Ende (72) einer den Außendurchmesser der Getriebeeingangswelle (9) umschließende Hülse (64) dient, die mit diesem Ende (72) den Elementenfuß (48) oder die Lagerung (56) gegen eine Axialverschiebung auf der Getriebeeingangswelle (9) sichert.

9. Torsionsschwingungsdämpfer nach Anspruch 8,
**dadurch gekennzeichnet,**
**dass** die Hülse (64) sich mit ihrem vom abtriebsseitigen Übertragungselement (116) abgewandten, antriebsseitigen Ende (73) an einem Radialvorsprung (74) der Getriebeeingangswelle (9) axial abstützt.

10. Torsionsschwingungsdämpfer nach Anspruch 9,
**dadurch gekennzeichnet,**
**dass** der Radialvorsprung (74) durch einen in eine Vertiefung (76) der Getriebeeingangswelle (9) eingreifenden radialen Spannring (78) gebildet ist.

11. Torsionsschwingungsdämpfer nach einem der Ansprüche 2 bis 10,
**dadurch gekennzeichnet,**
**dass** das den Elementenfuß (48) aufweisende Bauteil (50;136) radial außerhalb des Elementenfußes (48) Ausnehmungen (84) für den Durchgang und/oder die Montage von Befestigungselementen (29) aufweist, die eine Antriebsplatte (25) für das antriebsseitige Übertragungselement (35) mit einem Primärflansch (31) desselben verbinden.

12. Torsionsschwingungsdämpfer nach Anspruch 11,
**dadurch gekennzeichnet,**
**dass** die Antriebsplatte (25) eine axiale Distanz zwischen dem Primärflansch (31) des antriebsseitigen Übertragungselementes (35) und einer am Antrieb (1) befestigten, axial elastischen Platte (15) überbrückt.

13. Torsionsschwingungsdämpfer nach Anspruch 12,
**dadurch gekennzeichnet,**
**dass** die axial elastische Platte (15) gemeinsam mit einem Führungshohlzapfen (40) am Antrieb (1) befestigt ist, wobei der Führungshohlzapfen (40) zur Zentrierung des antriebsseitigen Übertragungselementes (35) zumindest während einer Montage am Antrieb (1) vorgesehen ist.

14. Torsionsschwingungsdämpfer nach wenigstens einem der Ansprüche 11 bis 13,
**dadurch gekennzeichnet,**
**dass** der Führungshohlzapfen (40) axial in den Erstreckungsbereich von Antriebsplatte (25) und Primärflansch (31) eingreift.

15. Torsionsschwingungsdämpfer nach wenigstens einem der Ansprüche 2 bis 14,
**dadurch gekennzeichnet,**
**dass** der Primärflansch (31) des antriebsseitigen Übertragungselementes (35) über eine sich in Richtung zum abtriebsseitigen Übertragungselement (116) erstreckende, vor oder während einer Montage der Übertragungselemente (35,116) zueinander wirksame Hilfszentrierung (46) verfügt, die vom Elementenfuß (48) des jeweiligen Bauteils (50;136) des abtriebsseitigen Übertragungselementes (116) zumindest entlang eines Teils seiner axialen Erstreckung radial umschlossen ist.

16. Torsionsschwingungsdämpfer nach Anspruch 15,
**dadurch gekennzeichnet,**
**dass** die Hilfszentrierung (46) bei fertig montierten Übertragungselementen (35,116) in Axialrichtung durch einen ersten Spalt (81) vorbestimmter Abmessung von der Lagerung (56) und/oder in Radialrichtung durch einen zweiten Spalt (82) vorbestimmter Abmessung vom Elementenfuß (56) getrennt ist.

17. Torsionsschwingungsdämpfer nach wenigstens einem der Ansprüche 1 bis 16 mit einem Antrieb, der über eine Kurbelwelle verfügt
**dadurch gekennzeichnet,**
**dass** die Kurbelwelle (3) eine Aufnahme (5) aufweist, die zur Zentrierung der Getriebeeingangswelle (9) eine dieselbe umschließende Pilotlagerung (7) aufnimmt.

18. Torsionsschwingungsdämpfer nach einem der Ansprüche 1 bis 17,
**dadurch gekennzeichnet,**
**dass** das antriebsseitige Übertragungselement (35) zur Aufnahme des Umfangsfedersatzes (129) über eine mit viskosem Medium befüllte Kammer (124) verfügt, die sich axial zwischen dem Primärflansch (31) und einem demselben zugeordneten Dichtblech (122) erstreckt, und der radial innen eine erste Dichtung (162), axial benachbart zum abtriebsseitigen Übertragungselement (116) dagegen eine zweite Dichtung (164) zugeordnet ist.

19. Torsionsschwingungsdämpfer nach Anspruch 18,
**dadurch gekennzeichnet,**
**dass** die erste Dichtung (162) mit einem Befestigungsende (166) am Primärflansch (31) des antriebsseitigen Übertragungselementes (35) angreift und mit einem Dichtungsende (170) in den Erstreckungsbereich eines Axialansatzes (174) am abtriebsseitigen Übertragungselement (116) geführt ist, den das Dichtungsende (117) im wesentlichen radial umschließt.

20. Torsionsschwingungsdämpfer nach Anspruch 18 oder 19,
**dadurch gekennzeichnet,**
**dass** die zweite Dichtung (164) mit einem Befestigungsende (168) an der Schwungmasse (50) des abtriebsseitigen Übertragungselementes (116) befestigt ist, und mit einem Dichtungsende (172) radial in den Erstreckungsbereich des Dichtbleches (122) des antriebsseitigen Übertragungselementes (35) geführt ist.

21. Torsionsschwingungsdämpfer nach Anspruch 18, 19 oder 20,
**dadurch gekennzeichnet,**
**dass** wenigstens eine der beiden Dichtungen (162,164) mit ihrem Befestigungsende (166,168) derart am jeweiligen Übertragungselement (35,116) aufgenommen und in Richtung zum jeweils anderen Übertragungselement (35,116) geführt ist, dass sie mit ihrem jeweiligen Dichtungsende (170,172) im wesentlichen berührungsfrei gegenüber dem letztgenannten Übertragungselement (35,116) zur Ausrichtung gelangt.

22. Torsionsschwingungsdämpfer nach einem der Ansprüche 1 bis 21,
**dadurch gekennzeichnet,**
**dass** das abtriebsseitige Ansteuerelement (144) am abtriebsseitigen Übertragungselement (116) für den Umfangsfedersatz (129) durch zumindest ein an der Schwungmasse (50) dieses Übertragungselementes (116) befestigtes Deckblech (142,143) gebildet ist, das über einen radial ersten Teil (126) des Umfangsfedersatzes (129) mit einer Nabenscheibe (136) verbunden ist, die ihrerseits über einen radial zweiten Teil (128) des Umfangsfedersatzes (129) mit antriebsseitigen Ansteuerelementen (132) des antriebsseitigen Übertragungselementes (35) in Verbindung steht, wobei die Nabenscheibe (136) sowohl gegenüber dem antriebsseitigen Übertragungselement (35) als auch gegenüber dem abtriebsseitigen Übertragungselement (116) relativ drehbar ist.

23. Torsionsschwingungsdämpfer nach Anspruch 22,
**dadurch gekennzeichnet,**
**dass** das zumindest eine Deckblech (142,143) in drehfester Verbindung mit einer Antriebsscheibe (149) steht, die aufgrund einer Innenverzahnung (151) als Hohlrad (150) eines Planetengetriebes (152) dient, das mit wenigstens einem am antriebsseitigen Übertragungselement (35) aufgenommenen Planetenrad (154) des Planetengetriebes (152) in Verzahnungseingriff steht.

24. Torsionsschwingungsdämpfer nach einem der Ansprüche 1 bis 23,
**dadurch gekennzeichnet,**
**dass** das abtriebsseitige Ansteuerelement (144) am abtriebsseitigen Übertragungselement (116) für den Umfangsfedersatz (129) durch eine an der Schwungmasse (50) dieses Übertragungselementes (116) befestigte Nabenscheibe (136) gebildet ist, die über den Umfangsfedersatz (129) mit antriebsseitigen Ansteuerelementen (132) des antriebsseitigen Übertragungselementes (35) in Wirkverbindung steht.

25. Torsionsschwingungsdämpfer nach wenigstens einen der Ansprüche 2 bis 24,
**dadurch gekennzeichnet,**
**dass** die Schwungmasse (50) des abtriebsseitigen Übertragungselementes (116) gegenüber der Nabenscheibe (136) oder gegenüber dem wenigstens einen Deckblech (142,143) weiter nach radial innen geführt ist, und dort den Elementenfuß (48) zur Positionierung gegenüber der Lagerung (56) aufweist.

26. Torsionsschwingungsdämpfer nach einem der Ansprüche 2 bis 24,
**dadurch gekennzeichnet,**
**dass** die Nabenscheibe (136) gegenüber der Schwungmasse (50) radial weiter nach innen geführt ist, und dort den Elementenfuß (48) zur Positionierung gegenüber der Lagerung (56) aufweist.

27. Torsionsschwingungsdämpfer nach einem der Ansprüche 4 bis 26,
**dadurch gekennzeichnet,**
**dass** die Lagerung (56) als Wälzlagerung (57) ausgebildet ist, mit einem radial äußeren Lagerring (58), der vom Elementenfuß (48) axial fest aufgenommen ist, und mit einem radial inneren Lagerring (60), der auf der Getriebeeingangswelle (9) axial bewegungsgesichert aufgenommen ist.

28. Torsionsschwingungsdämpfer nach einem der Ansprüche 12 bis 27,
**dadurch gekennzeichnet,**
**dass** die Antriebsplatte (25) im wesentlichen topfförmig mit einem erheblichen axialen Erstreckungsanteil zur Schaffung eines axialen Durchgangsraumes (28) für zumindest ein momentenübertragendes Element (160) ausgebildet ist.

29. Torsionsschwingungsdämpfer nach einem der Ansprüche 1 bis 28,
**dadurch gekennzeichnet,**
**dass** das abtriebsseitige Übertragungselement (116) an seiner Schwungmasse (50) zur Aufnahme einer Reibungskupplung (88) dient.

30. Torsionsschwingungsdämpfer nach einem der Ansprüche 2 oder 3,
**dadurch gekennzeichnet,**
**dass** der Elementenfuß (48) an seinem der Getriebeeingangswelle (9) zugewandten Innendurchmesser mit einer reibungsvermindernden Beschichtung (80) versehen ist.

31. Torsionsschwingungsdämpfer nach Anspruch 4,
**dadurch gekennzeichnet,**
**dass** der Elementenfuß (48) an seinem der Lagerung (56) zugewandten Innendurchmesser mit einer die Lagerung (56) axial bewegungssichernd aufnehmenden Radialprofilierung (54) ausgebildet ist.

32. Verfahren zur Montage eines Torsionsschwingungsdämpfers an einem Antrieb, wie der Kurbelwelle einer Brennkraftmaschine,
**gekennzeichnet durch** folgende Montageschritte:
• Verbindung eines antriebsseitigen Übertragungselementes (35) einerseits über eine Dämpfungseinrichtung (130) mit einem abtriebsseitigen Übertragungselement (116) und andererseits mit einer Antriebsplatte (25),
• Aufpressen des abtriebsseitigen Übertragungselementes (116) unter radialer Zwischenschaltung einer Lagerung (56) auf einen Abtrieb (11), wie eine Getriebeeingangswelle (9) zur Erzielung einer axial festen Positionierung des abtriebsseitigen Übertragungselementes (116) gegenüber der Getriebeeingangswelle (9),
• Axialannäherung der Getriebeeingangswelle (9) an die Kurbelwelle (3) bis zur Axialanlage der Antriebsplatte (25) an einer mit der Kurbelwelle (3) verbundenen axial elastischen Platte (15), und
• Befestigung der Antriebsplatte (25) an der axial elastischen Platte (15).

## Claims

1. Torsional vibration damper having a drive-side transmission element (35), which is rotationally locked to a drive (1) and centred thereby, and an output-side transmission element (116), which by way of a damping device (130) is rotationally displaceable in relation to the drive-side transmission element (35) and which is centred on an output (11), **characterized in that** the output-side transmission element (116) is axially secured to the output (11).

2. Torsional vibration damper according to Claim 1, having an output-side transmission element (116), which by way of a centrifugal mass (50) and at least one output-side control element (144), rotationally locked thereto, serves for a peripheral spring assembly (129) associated with the damping device (130), and an output (11) formed by a transmission input shaft (9), **characterized in that** either the centrifugal mass (50) or an output-side control element (144) is intended to be axially secured on the transmission input shaft (9) by way of an element foot (48).

3. Torsional vibration damper according to Claim 2, **characterized in that** the element foot (48) is axially secured directly on the transmission input shaft (9).

4. Torsional vibration damper according to Claim 2, having a bearing arranged radially between the output-side transmission element and the transmission input shaft, **characterized in that** the element foot (48) is axially secured on the transmission input shaft (9) by way of the bearing (56).

5. Torsional vibration damper according to any one of Claims 1, 2 or 4, **characterized in that** the bearing (56) is pressed onto the transmission input shaft (9) in order to axially secure the output-side transmission element (116).

6. Torsional vibration damper according to any one of Claims 1 to 4 or 5, **characterized in that** the element foot (48) of the output-side transmission element (116) is held axially between fixing elements (66, 68) assigned to the transmission input shaft (9).

7. Torsional vibration damper according to any one of Claims 1 to 4 or 5, **characterized in that** the bearing (56) is held axially between the fixing elements (66, 68).

8. Torsional vibration damper according to Claim 6 or 7, **characterized in that**, in order to form a first fixing element (66), the transmission input shaft (9) has a shoulder (70), against which the element foot (48) or the bearing (56) comes to rest with a first axial side, and that an output-side end (72) of a sleeve (64), facing the output-side transmission element (116) and enclosing the outside diameter of the transmission input shaft (9), serves as second fixing element (68), said sleeve, with this end (72), securing the element foot (48) or the bearing (56) to prevent axial displacement on the transmission input shaft (9).

9. Torsional vibration damper according to Claim 8, **characterized in that** the sleeve (64) is axially supported by its drive-side end (73) remote from the output-side transmission element (116) against a radial projection (74) of the transmission input shaft (9).

10. Torsional vibration damper according to Claim 9, **characterized in that** the radial projection (74) is formed by a radial locking ring (78) engaging in a depression (76) of the transmission input shaft (9).

11. Torsional vibration damper according to any one of Claims 2 to 10, **characterized in that** the component (50, 136) having the element foot (48) has recesses (84) radially outside the element foot (48) for the passage and/or the fitting of fasteners (29), which connect the drive plate (25) for the drive-side transmission element (35) to a primary flange (31) thereof.

12. Torsional vibration damper according to Claim 11, **characterized in that** the drive plate (25) bridges an axial distance between the primary flange (31) of the drive-side transmission element (35) and an axially elastic plate (15) fixed to the drive (1).

13. Torsional vibration damper according to Claim 12, **characterized in that** the axially elastic plate (15) together with a hollow guide spigot (40) is fixed to the drive (1), the hollow guide spigot (40) being intended for centring the drive-side transmission element (35), at least during fitting to the drive (1).

14. Torsional vibration damper according to at least one of Claims 11 to 13, **characterized in that** the hollow guide spigot (40) intrudes axially into the area over which the drive plate (25) and the primary flange (31) extend.

15. Torsional vibration damper according to at least one of Claims 2 to 14, **characterized in that** the primary flange (31) of the drive-side transmission element (35) has an auxiliary centring (46) extending towards the output-side transmission element (116) and acting prior to or during fitting of the transmission elements (35, 116), which auxiliary centring is radially enclosed, at least over a part of its axial extent, by the element foot (48) of the respective component (50; 136) of the output-side transmission element (116).

16. Torsional vibration damper according to Claim 15, **characterized in that**, with the transmission elements (35, 116) ready fitted, the auxiliary centring (46) is axially separated from the bearing (56) by a first gap (81) of predefined dimension and/or radially separated from the element foot (48) by a second gap (82) of predefined dimension.

17. Torsional vibration damper according to at least one of Claims 1 to 16, with a drive, which has a crankshaft, **characterized in that** the crankshaft (3) has a seat (5), which for centring the transmission input shaft (9) accommodates a pilot bearing (7) enclosing this.

18. Torsional vibration damper according to any one of Claims 1 to 17, **characterized in that**, in order to accommodate the peripheral spring assembly (129), the drive-side transmission element (35) has a chamber (124), which is filled with a viscous medium and extends axially between the primary flange (31) and a sealing plate (122) assigned thereto, and to which a first seal (162) is assigned radially inside, with a second seal (164) axially adjacent to the output-side transmission element (116).

19. Torsional vibration damper according to Claim 18, **characterized in that** the first seal (162) bears with a fixing end (166) against the primary flange (31) of the drive-side transmission element (35) and is guided by a sealing end (170) into the area over which the axial projection (174) on the output-side transmission element (116) extends, the sealing end (117) enclosing said element essentially radially.

20. Torsional vibration damper according to Claim 18 or 19, **characterized in that** the second seal (164) is fixed by a fixing end (168) to the centrifugal mass (50) of the output-side transmission element (116) and is guided by a sealing end (172) radially into the area over which the sealing plate (122) of the drive-side transmission element (35) extends.

21. Torsional vibration damper according to Claims 18, 19 or 20, **characterized in that** at least one of the two seals (162, 164) is seated by its fixing end (166, 168) on the respective transmission element (35, 116) and is guided in the direction of the other transmission element (35, 116) in such a way that with its respective sealing end (170, 172) it aligns with said transmission element (35, 116), basically without coming into contact therewith.

22. Torsional vibration damper according to any one of Claims 1 to 21, **characterized in that** the output-side control element (144) on the output-side transmission element (116) for the peripheral spring assembly (129) is formed by at least one cover plate (142, 143), which is fixed to the centrifugal mass (50) of this transmission element (116) and which is connected by a first radial part (126) of the peripheral spring assembly (129) to a hub disc (136), which is in turn connected by a second radial part (128) of the peripheral spring assembly (129) to drive-side control elements (132) of the drive-side transmission element (35), the hub disc (136) being rotatable both in relation to the drive-side transmission element (35) and to the output-side transmission element (116).

23. Torsional vibration damper according to Claim 22, **characterized in that** at least one cover plate (142, 143) is rotationally locked to a drive disc (149), which by virtue of inner toothing (151) serves as internal gear (150) of a planetary transmission (152), which is in meshing toothed engagement with at least one planet gear (154) of the planetary transmission (152) seated on the drive-side transmission element (35).

24. Torsional vibration damper according to any one of Claims 1 to 23, **characterized in that** the output-side control element (144) on the output-side transmission element (116) for the peripheral spring assembly (129) is formed by a hub disc (136), which is fixed to the centrifugal mass (50) of this transmission element (116) and which is operatively connected by way of the peripheral spring assembly (129) to drive-side control elements (132) of the drive-side transmission element (35).

25. Torsional vibration damper according to at least one of Claims 2 to 24, **characterized in that** the centrifugal mass (50) of the output-side transmission element (116) is carried radially further inwards in relation to the hub disc (136) or in relation to at least one cover plate (142, 143), where it has the element foot (48) for positioning in relation to the bearing (56).

26. Torsional vibration damper according to any one of Claims 2 to 24, **characterized in that** the hub disc (136) is carried radially further inwards in relation to the centrifugal mass (50), where it has the element foot (48) for positioning in relation to the bearing (56).

27. Torsional vibration damper according to any one of Claims 4 to 26, **characterized in that** the bearing (56) takes the form of a roller bearing (57), with a radially outer bearing race (58), which is axially fixed by the element foot (48), and with a radially inner bearing race (60), which is axially secured on the transmission input shaft (9).

28. Torsional vibration damper according to any one of Claims 12 to 27, **characterized in that** the drive plate (25) is of basically canister-shaped design having a portion of considerable axial extent for creating an axial passage (28) for at least one torque-transmitting element (160).

29. Torsional vibration damper according to any one of Claims 1 to 28, **characterized in that** the output-side transmission element (116) on its centrifugal mass (50) serves to accommodate a friction clutch (88).

30. Torsional vibration damper according to either of Claims 2 or 3, **characterized in that**, on its inside diameter facing the transmission input shaft (9), the element foot (48) is provided with a friction-reducing coating (80).

31. Torsional vibration damper according to Claim 4, **characterized in that**, on its inside diameter facing the bearing (56), the element foot (48) is formed with a radial profiling (54) serving to secure the bearing (56) axially.

32. Method for fitting a torsional vibration damper to a drive, such as the crankshaft of an internal combustion engine, **characterized by** the following steps:
• Connection of a drive-side transmission element (35) on the one hand to an output-side transmission element (116) via a damping device (130) and on the other to a drive plate (25),
• Pressing the output-side transmission element (116) with the radial interposition of a bearing (56) onto an output (11), such as a transmission input shaft (9), in order to obtain an axially fixed positioning of the output-side transmission element (116) in relation to the transmission input shaft (9),
• Bringing the transmission input shaft (9) axially nearer to the crankshaft (3) until drive plate (25) bears axially against an axially elastic plate (15) connected to the crankshaft (3), and
• Fixing the drive plate (25) to the axially elastic plate (15).

## Revendications

1. Amortisseur de vibrations en torsion qui présente un élément de transmission (35) situé du côté de l'entraînement, qui s'engage à rotation solidaire sur un entraînement (1) et qui est centré par ce dernier, ainsi qu'un élément de transmission (116) situé du côté entraîné, qui peut être tourné par rapport à l'élément de transmission (35) situé du côté de l'entraînement par l'intermédiaire d'un dispositif d'amortissement (130) et qui est centré sur un ensemble entraîné (11), **caractérisé en ce que** l'élément de transmission (116) situé du côté entraîné est repris sur l'ensemble entraîné (11) de manière à ne pas pouvoir se déplacer axialement.

2. Amortisseur de vibrations en torsion selon la revendication 1, qui présente un élément de transmission (116) situé du côté entraîné et qui sert à un ensemble (129) de ressorts périphériques associé au dispositif d'amortissement (130) par l'intermédiaire d'une masse oscillante (50) et d'au moins un élément de commande (144) situé du côté entraîné et relié à rotation solidaire à cette masse oscillante, ainsi qu'un ensemble entraîné (11) formé par un arbre (9) d'entrée de transmission, **caractérisé en ce que** la masse oscillante (50) ou un élément de commande (144) situé du côté entraîné sont prévus pour être repris sans possibilité de déplacement axial sur l'arbre (9) d'entrée de la transmission, par l'intermédiaire d'un pied d'élément (48).

3. Amortisseur de vibrations en torsion selon la revendication 2, **caractérisé en ce que** le pied d'élément (48) est repris directement sur l'arbre (9) d'entrée de transmission de manière à ne pas pouvoir se déplacer axialement.

4. Amortisseur de vibrations en torsion selon la revendication 2, qui présente un palier disposé entre l'élément de transmission situé du côté entraîné et l'arbre d'entrée de transmission, **caractérisé en ce que** le pied d'élément (48) est repris sur l'arbre (9) d'entrée de transmission par l'intermédiaire du palier (56) de manière à être empêché de se déplacer axialement.

5. Amortisseur de vibrations en torsion selon l'une des revendications 1, 2 ou 4, **caractérisé en ce que** le palier (56) est repoussé sur l'arbre (9) d'entrée de transmission de manière à empêcher le déplacement axial de l'élément de transmission (116) situé du côté entraîné.

6. Amortisseur de vibrations en torsion selon l'une des revendications 1 à 4 ou 5, **caractérisé en ce que** le pied d'élément (48) de l'élément de transmission (116) situé du côté entraîné est maintenu axialement entre des éléments de fixation (66, 68) associés à l'arbre (9) d'entrée de transmission.

7. Amortisseur de vibrations en torsion selon les revendications 1 à 4 ou 5, **caractérisé en ce que** le palier (56) est maintenu axialement entre les éléments de fixation (66, 68).

8. Amortisseur de vibrations en torsion selon les revendications 6 ou 7, **caractérisé en ce que** pour former un premier élément de fixation (66), l'arbre (9) d'entrée de transmission présente un épaulement (70) sur lequel le pied d'élément (48) ou le palier (56) vient se placer par un premier côté axial, une extrémité (72), située du côté entraîné et tournée vers l'élément de transmission (116) situé du côté entraîné, d'une douille (64) qui entoure le diamètre extérieur de l'arbre (9) d'entrée de transmission servant de deuxième élément de fixation (68), cette douille empêchant par cette extrémité (72) le pied d'élément (48) ou le palier (56) de se déplacer axialement sur l'arbre (9) d'entrée de transmission.

9. Amortisseur de vibrations en torsion selon la revendication 8, **caractérisé en ce que** l'extrémité (73), située du côté de l'entraînement et non tournée vers l'élément de transmission (116) situé du côté entraîné, de la douille (64) s'appuie axialement sur une saillie radiale (74) de l'arbre (9) d'entrée de transmission.

10. Amortisseur de vibrations en torsion selon la revendication 9, **caractérisé en ce que** la saillie radiale (74) est formée par un anneau radial de serrage (78) qui s'engage dans un creux (76) de l'arbre (9) d'entrée de transmission.

11. Amortisseur de vibrations en torsion selon l'une des revendications 2 à 10, **caractérisé en ce que** le composant (50; 136) qui présente le pied d'élément (48) présente radialement à l'extérieur du pied d'élément (48) des découpes (84) qui permettent le passage et/ou le montage d'éléments de fixation (29) qui relient une plaque d'entraînement (25) de l'élément de transmission (35) situé du côté entraîné à une bride primaire (31) de cet élément.

12. Amortisseur de vibrations en torsion selon la revendication 11, **caractérisé en ce que** la plaque d'entraînement (25) couvre une distance axiale entre la bride primaire (31) de l'élément de transmission (35) situé du côté de l'entraînement et une plaque axialement élastique (15) fixée sur l'entraînement (1).

13. Amortisseur de vibrations en torsion selon la revendication 12, **caractérisé en ce que** la plaque axialement élastique (15) est fixée à l'entraînement (1) en même temps qu'un tourillon creux de guidage (40), le tourillon creux de guidage (40) étant prévu pour centrer l'élément de transmission (35) situé du côté de l'entraînement au moins pendant son montage sur l'entraînement (1).

14. Amortisseur de vibrations en torsion selon au moins l'une des revendications 11 à 13, **caractérisé en ce que** le tourillon creux de guidage (40) s'engage axialement dans la zone où s'étendent la plaque d'entraînement (25) et la bride primaire (31).

15. Amortisseur de vibrations en torsion selon au moins l'une des revendications 2 à 14, **caractérisé en ce que** la bride primaire (31) de l'élément de transmission (35) situé du côté de l'entraînement est dotée d'un centrage auxiliaire (46) qui agit avant ou pendant le montage des éléments de transmission (35, 116) l'un par rapport à l'autre et qui s'étend en direction de l'élément de transmission (116) situé du côté entraîné, au moins sur une partie de l'extension axiale de ce centrage auxiliaire étant entourée radialement par le pied d'élément (48) du composant (50; 136) concerné de l'élément de transmission (116) situé du côté entraîné.

16. Amortisseur de vibrations en torsion selon la revendication 15, **caractérisé en ce que** lorsque les éléments de transmission (35, 116) sont montés, le centrage auxiliaire (46) est séparé dans la direction axiale par un premier interstice (81) de dimension prédéterminée du palier (56) et/ou est séparé dans la direction radiale par un deuxième interstice (82) de dimension prédéterminée du pied d'élément (56).

17. Amortisseur de vibrations en torsion selon au moins l'une des revendications 1 à 16, qui présente un entraînement doté d'un vilebrequin, **caractérisé en ce que** le vilebrequin (3) présente un logement (5) qui reçoit un palier pilote (7) qui entoure l'arbre (9) d'entrée de transmission pour centrer ce dernier.

18. Amortisseur de vibrations en torsion selon au moins l'une des revendications 1 à 17, **caractérisé en ce que** l'élément de transmission (35) situé du côté de l'entraînement présente une chambre (124) remplie d'un fluide visqueux pour recevoir l'ensemble (129) de ressorts périphériques, laquelle chambre s'étend axialement entre la bride primaire (31) et une tôle d'étanchéité (122) associée à cette bride, à laquelle un premier joint d'étanchéité (162) est associé du côté radialement intérieur mais à laquelle est associé un deuxième joint d'étanchéité (164) voisin axialement de l'élément de transmission (116) situé du côté entraîné.

19. Amortisseur de vibrations en torsion selon la revendication 18, **caractérisé en ce que** le premier joint d'étanchéité (162) s'engage par une extrémité de fixation (166) sur la bride primaire (31) de l'élément de transmission (35) situé du côté de l'entraînement et est guidé sur l'élément de transmission (116) situé du côté entraîné par une extrémité d'étanchéité (170) dans la zone d'extension d'un ensemble axial (174), l'extrémité d'étanchéité (117) entourant essentiellement radialement l'élément de transmission (116).

20. Amortisseur de vibrations en torsion selon les revendications 18 ou 19, **caractérisé en ce que** le deuxième joint d'étanchéité (164) est fixé par une extrémité de fixation (168) sur la masse oscillante (50) de l'élément de transmission (116) situé du côté entraîné et est guidé radialement par une extrémité d'étanchéité (172) dans la plage d'extension de la tôle d'étanchéité (122) de l'élément de transmission (35) situé du côté de l'entraînement.

21. Amortisseur de vibrations en torsion selon les revendications 18, 19 ou 20, **caractérisé en ce qu'**au moins l'un des deux joints d'étanchéité (162, 164) est reçu par son extrémité de fixation (166, 168) sur l'élément de transmission (35, 116) respectif et est guidé en direction de l'autre élément de transmission (35, 116) respectif de telle sorte que son extrémité d'étanchéité (170, 172) soit alignée essentiellement sans contact sur l'élément de transmission (35, 116) mentionné en dernier.

22. Amortisseur de vibrations en torsion selon l'une des revendications 1 à 21, **caractérisé en ce que** l'élément de commande (144) situé du côté entraîné prévu sur l'élément de transmission (116) situé du côté entraîné pour l'ensemble (129) de ressorts périphériques est formé par au moins une tôle de recouvrement (142, 143) fixée sur la masse oscillante (50) de cet élément de transmission (116), cette tôle étant reliée par une première partie radiale (126) de l'ensemble (129) de ressorts périphériques à un disque de moyeu (136) qui lui-même est relié par une deuxième partie radiale (128) de l'ensemble (129) de ressorts périphériques à des éléments de commande (132), situés du côté de l'entraînement, de l'élément de transmission (35) situé du côté de l'entraînement, le disque de moyeu (136) pouvant tourner aussi bien par rapport à l'élément de transmission (35) situé du côté de l'entraînement que par rapport à l'élément de transmission (116) situé du côté entraîné.

23. Amortisseur de vibrations en torsion selon la revendication 22, **caractérisé en ce que** la ou les tôles de recouvrement (142, 143) sont reliées à rotation solidaire à un disque d'entraînement (149) qui, grâce à une denture intérieure (151), sert de roue creuse (150) pour un entraînement à planétaire (152) qui s'engrène par au moins une roue planétaire (154), reprise sur l'élément de transmission (35) situé du côté de l'entraînement, de la transmission planétaire (152).

24. Amortisseur de vibrations en torsion selon l'une des revendications 1 à 23, **caractérisé en ce que** l'élément de commande (144) situé du côté entraîné et placé sur l'élément de transmission (116), situé du côté entraîné, de l'ensemble (129) de ressorts périphériques, est formé par un disque de moyeu (136) fixé sur la masse oscillante (50) de cet élément de transmission (116) et coopère par l'intermédiaire de l'ensemble (129) de ressorts périphériques avec des éléments de commande (132), situés du côté de l'entraînement, de l'élément de transmission (35) situé du côté de l'entraînement.

25. Amortisseur de vibrations en torsion selon au moins l'une des revendications 2 à 24, **caractérisé en ce que** la masse oscillante (50) de l'élément de transmission (116) situé du côté entraîné se prolonge radialement vers l'intérieur plus loin que le disque de moyeu (136) ou que la ou les tôles de recouvrement (142, 143), et présente en cet emplacement le pied d'élément (48) qui sert à assurer le positionnement par rapport au palier (56).

26. Amortisseur de vibrations en torsion selon l'une des revendications 2 à 24, **caractérisé en ce que** le disque de moyeu (136) se prolonge radialement vers l'intérieur plus loin que la masse oscillante (50) et présente en cet emplacement le pied d'élément (48) qui sert à assurer le positionnement par rapport au palier (56).

27. Amortisseur de vibrations en torsion selon l'une des revendications 4 à 26, **caractérisé en ce que** le palier (56) est configuré comme palier (57) à roulement qui présente une bague de palier (58) située radialement à l'extérieur et reprise dans le pied d'élément (48) de manière à être fixé axialement, et une bague de palier (60) située radialement à l'intérieur et reprise sur l'arbre (9) d'entrée de transmission de manière à être empêchée de se déplacer axialement.

28. Amortisseur de vibrations en torsion selon l'une des revendications 12 à 27, **caractérisé en ce que** la plaque d'entraînement (25) présente essentiellement la forme d'un chapeau doté d'une partie qui s'étend considérablement dans le sens axial pour créer un espace axial (28) de passage pour au moins un élément (160) de transmission de couple.

29. Amortisseur de vibrations en torsion selon l'une des revendications 1 à 28, **caractérisé en ce que** la masse oscillante (50) de l'élément de transmission (116) situé du côté entraîné sert à loger un accouplement à frottement (88).

30. Amortisseur de vibrations en torsion selon l'une des revendications 2 ou 3, **caractérisé en ce que** le pied d'élément (48) présente sur son diamètre intérieur tourné vers l'arbre (9) d'entrée de transmission un revêtement (80) qui diminue le frottement.

31. Amortisseur de vibrations en torsion selon la revendication 4, **caractérisé en ce que** le diamètre intérieur tourné vers le palier (56) du pied d'élément (48) présente un profil radial (54) qui reprend le palier (56) de manière à l'empêcher de se déplacer axialement.

32. Procédé de montage d'un amortisseur de vibrations en torsion sur un entraînement, par exemple le vilebrequin d'un moteur à combustion interne, **caractérisé par** les étapes de montage suivantes :
- relier un élément de transmission (35) situé du côté de l'entraînement d'une part à un élément de transmission (116) situé du côté entraîné, par l'intermédiaire d'un dispositif d'amortissement (130), et d'autre part à une plaque d'entraînement (25),
- repousser l'élément de transmission (116) situé du côté entraîné, en intercalant radialement un palier (56), sur un ensemble entraîné (11), par exemple l'arbre (9) d'entrée d'une transmission, pour obtenir un positionnement axial fixe de l'élément de transmission (116) situé du côté entraîné par rapport à l'arbre (9) d'entrée de transmission,
- rapprocher axialement l'arbre (9) d'entrée de transmission vers l'arbre de vilebrequin (3) jusqu'à ce que la plaque d'entraînement (25) vienne se placer axialement sur une plaque axialement élastique (15) reliée à l'arbre de vilebrequin (3) et
- fixer la plaque d'entraînement (25) sur la plaque axialement élastique (15).
